# EUROPÄISCHE PATENTSCHRIFT

(11) **EP 2 379 954 B1**
(45) Veröffentlichungstag und Bekanntmachung des Hinweises auf die Patenterteilung: **09.01.2013**
(21) Anmeldenummer: 09744317.0
(22) Anmeldetag: 14.09.2009
(51) Int. Cl.: F24J 2/46, B08B 1/00, B08B 3/02

(54) **VORRICHTUNG ZUR REINIGUNG VON SOLARANLAGEN**
DEVICE FOR CLEANING SOLAR INSTALLATIONS
DISPOSITIF DE NETTOYAGE D'INSTALLATIONS SOLAIRES

(43) Veröffentlichungstag der Anmeldung: 26.10.2011
(73) Patentinhaber: Joachim Herborn Gebäudereinigungsmeisterbetrieb GmbH, 97990 Weikersheim (DE)
(72) Erfinder: HERBORN, Joachim, 97244 Bütthard (DE)
(74) Vertreter: advotec.
(86) Internationale Anmeldenummer: PCT/DE2009/001277
(87) Internationale Veröffentlichungsnummer: WO 2011/029416

(56) Entgegenhaltungen:
- WO-A1-2008/154521
- WO-A1-2009/061046
- WO-A2-2007/024397
- BE-A1- 873 886
- DE-A1-102004 026 389
- DE-U1-202008 007 802
- US-A- 5 794 298

## Beschreibung

Die Erfindung betrifft eine Vorrichtung zur Reinigung der Oberfläche von Solaranlagen, zur Wiederherstellung des optimalen Wirkungsgrades der Solaranlagen.

Aus dem Stand der Technik sind verschiedene Vorrichtungen zur Reinigung von Solaranlagen bekannt. So gibt es zum einen Vorrichtungen, welche dafür sorgen, dass kontinuierlich bzw. wiederkehrend ein Wasserfilm über die Solaranlage verläuft, so dass darauf haftende Schmutzpartikel weggespült werden. Ein Beispiel für eine derartige Solaranlagenreinigung zeigt die Schrift DE 20 2008 010 528 U1. Hier wird dargestellt, dass durch die Anordnung von Metallelementen oberhalb der Solaranlage eine Ionisierung des durchfließenden Wassers hervorgerufen werden kann, welches die Algenbildung bzw. den Bewuchs auf der Oberfläche der Solaranlage verhindert.

Insbesondere wird in dieser Schrift darauf hingewiesen, dass somit die manuelle Reinigung entfallen kann, zu deren Zweck die Schrift WO 2008/014760 A2 eine Teleskopreinigungsbürste offenbart. Die manuelle Reinigung mit einer derartigen Teleskopstange mit sich an deren Ende befindenden Bürsten ist die gängige Reinigungsmethode von Solaranlagen. Da die Reinigung von Solaranlagen nur sporadisch erforderlich ist, ist es vielfach nicht zweckmäßig, eine fest installierte Reinigungsanlage anzubringen, insofern als durch die manuelle Reinigung die Kosten für die Investition in eine Reinigungsanlage gespart werden.

Hingegen gibt es in dem Stand der Technik eine Mehrzahl von Vorrichtungen zur Reinigung von Solaranlagen, welche in der Regel fest an der Solaranlage montiert sind. So zeigt die Schrift DE 20 2008 007 802 U1 eine Vorrichtung, welche aus einer Führung und einem Waschbalken besteht, wobei an diesem Balken eine Vielzahl von Waschdüsen angebracht ist, durch die entsprechendes Waschwasser auf die Solarzellen gespritzt wird. Senkrecht zum Balken in der Ebene der Solarzellen befindet sich die Führung, durch die dieser Waschbalken über die gesamte Fläche der Solarzellen geführt werden kann. Somit ist es in einfacher Weise möglich, die gesamte Solaranlagenfläche regelmäßig durch Absprühen mittels Wasser zu reinigen. Techniken dieser Art gibt es mehrere, wobei allen gemein ist, dass diese eine Führung an der Solaranlage besitzen und einen Balken, an dem die entsprechende Reinigungseinrichtung montiert ist. Nachteilig bei dieser Art der Reinigungseinrichtung ist es, dass mittels der Waschdüsen, zwar leicht anhaftende Schmutzpartikel entfernt werden können, jedoch nicht festsitzende, wie zum Beispiel Vogelkot, die sich nur durch eine mechanische Reinigung entfernen lassen.

Zu diesem Zweck zeigt die Schrift DE 20 2006 003 697 U1 eine Vorrichtung zur Reinigung von Solaranlagen, bei der ein Schlitten über die Solaranlagenfläche geführt werden kann. Dieser Schlitten besteht zunächst aus einem Schieber, welcher vorgesehen ist, um gröbere Schmutzpartikel entfernen zu können. Nachfolgend kommen rotierende Bürsten, welche feineren Schmutz lösen und entfernen sollen, zum Einsatz. Abschließend soll der lose Schmutz mittels einer Wischerblattanordnung vollständig von der Solarzelle entfernt werden. Diese Ausführung ist jedoch in mehreren Hinsichten nachteilig, insofern als zunächst kein Wasser verwendet wird und somit auf keinen Fall sichergestellt ist, dass der Staub sicher von der Oberfläche entfernt wird.

Weiterhin zeigt die Schrift WO 2009/061046 A1 eine automatische Solaranlagen-Waschvorrichtung. Hierbei ist fest mit dem Solarpanel eine Führung verbunden, in der wiederum ein balkenartiger Träger quer zum Solarpanel bewegt werden kann. Um eine optimale Reinigung der Oberfläche zu erzielen wird vorgeschlagen, am Balken eine Reinigungseinheit aus zwei Reihen an Waschdüsen mit zwischengelagerten Wischblättern einzusetzen. Entsprechend der Bewegungsrichtung des Waschbalkens stehen die Wischblätter quer hierzu und in Richtung des Balkens.

Entsprechend der festen Anbringung an der Solaranlage ist es möglich, die Reinigungseinheit in kurzen Zeitabständen in Betrieb zu nehmen. Daher ist die Gefahr von stärkerer Verschmutzung geringer, als nur bei einem sporadischen über einen langen Zeitraum von beispielsweise einem Jahr verteilten Reinigungseinsatz. Hierbei ist die vorgenannte Lösung jedoch unzureichend, da fest haftender Schmutz nicht von den Wischblättern entfernt werden kann.

Gleichsam mit allen weiteren derartigen Vorrichtungen zur Reinigung von Solarzellen besitzen diese den Nachteil, dass die Führung fest an der Solaranlage montiert ist. In der Regel bedeutet dies auch, dass die Vorrichtung zur Reinigung jener Solaranlage ebenfalls fest mit der Solaranlage verbunden ist. Da jedoch die Reinigung nicht wöchentlich, sondern allenfalls mehrmals pro Jahr erforderlich ist, bedeutet die fest installierte Reinigungsanlage sehr hohe Investitionskosten, ohne dass dazu eine Notwendigkeit besteht. Aus diesem Grund wird in der Regel auch nur eine manuelle Reinigung eingesetzt, da diese Investitionskosten sich in keinem Fall rechtfertigen.

Ausgehend von dieser Problematik ist es Aufgabe der vorliegenden Erfindung, eine Reinigungsvorrichtung für Solaranlagen zu entwickeln, welche mobil eingesetzt werden kann und zugleich eine hohe Reinigungsleistung erzielt.

Da Wasser als Reinigungsmittel effektiv und kostengünstig ist, bietet dieses sich vorteilhafterweise an.

Zur Verteilung von Wasser auf großen Flächen sind aus dem Stand der Technik aus dem landwirtschaftlichen Bereich Spritzgeräte bekannt, bei denen an einem langen Balken eine Vielzahl von Waschdüsen angebracht ist. Der Balken in Form eines Auslegers kann entsprechend den Erfordernissen - Bewuchshöhe der zu bespritzenden Pflanzen - bei Anbringung an einem Nutzfahrzeug in der Höhe verstellt werden. Ein Klappmechanismus ermöglicht es, den Balken in Platz sparender Weise an das Fahrzeug (oder den Anhänger) heranzuklappen, um somit insbesondere den Transport auf öffentlichen Straßen zu ermöglichen. Beispielhafte Ausführungen zeigen die Schrift DE 33 41 967 A1 sowie die Druckschrift DE 41 19 992 A1.

Insofern ist es die weitergehende Aufgabe, die Vorrichtung zur Reinigung von Solaranlagen in einer mobilen Ausführung derart auszuführen, dass diese an einem Nutzfahrzeug angebracht werden kann.

Die Aufgabe zur Gestaltung einer Vorrichtung zur Reinigung von Solaranlagen wird durch die Lehre des Hauptanspruchs 1 gelöst. Die Aufgabe zur Verwendung der Vorrichtung an einem Nutzfahrzeug wird durch den unabhängigen Hauptanspruch 12 gelöst.

Vorteilhafte Ausführungsformen der Erfindung sind Gegenstand der Unteransprüche.

Bei der Betrachtung der Hauptverschmutzung auf Solaranlagen stellt sich heraus, dass dies Staub und andere fest haftende Partikel, wie z.B. Vogelkot, sind. Zur Entfernung dieses Schmutzes eignet sich vorteilhafterweise eine Kombination aus: erstens einer Vielzahl von Waschdüsen, welche den ersten gröbsten Schmutz entfernen und somit insbesondere bereits den Hauptteil des darauf liegenden Staubs entfernen; zweitens darauf folgend einer Vielzahl von Waschbürsten, womit vorwiegend fest haftende Partikel gelöst und entfernt werden; und drittens abschlie-βend wiederum einer Benetzung der Oberfläche mit Wasser mittels wiederum einer Vielzahl von Waschdüsen, die den Restschmutz abschließend entfernen. Zur Erzielung einer rückstandsfreien Solaranlagen-Oberfläche wird vorteilhafterweise Reinstwasser verwendet.

Um fest haftenden Schmutz effektiv und sicher entfernen zu können, gleichzeitig aber die Oberfläche der Solaranlage nicht zu verkratzen oder zu beschädigen, ist es besonders vorteilhaft, wenn die Waschbürsten sich in einer wischenden Bewegung auf der Solaranlagenfläche bewegen, d.h. die Waschbürsten bewegen sich in der Fläche der Solaranlage und in keinem Fall in einer rotierenden Bewegung, wie dies bei Vorrichtungen aus dem Stand der Technik bekannt ist. Insofern ist es erfindungsgemäß vorgesehen eine oszillierende Bewegung durchzuführen, wobei sich die Waschbürsten bei der Bewegung relativ zur Vorrichtung näherungsweise parallel zum Träger der Vorrichtung bewegen.

Zur Gestaltung einer entsprechenden Vorrichtung zur Reinigung von Solaranlagen ist es vorteilhaft, hierzu einen langen Träger zu verwenden, welcher quer über die zu reinigende Solaranlagenfläche reicht. An diesem sind entsprechend auf der einen Seite zunächst einmal die entsprechenden Waschdüsen zur groben Vorreinigung, dann darauf folgend in zwei Reihen die Waschbürsten angeordnet, sowie auf der gegenüberliegenden Seite entsprechend wiederum eine Reihe von Waschdüsen, welche den verbleibenden Restschmutz sicher entfernen. Dieses ist gewährleistet, da Solaranlagen nahezu ausnahmslos nicht waagerecht, sondern geneigt angebracht sind, und somit das Waschwasser mit dem Schmutz zur Seite hin abfließt.

Da es nicht möglich und sinnvoll ist, eine einzige große Waschbürste einzusetzen, kommen folglich eine Vielzahl von in einer Reihe angeordneten Waschbürsten zum Einsatz. Um in einfacher Weise eine oszillierende Bewegung aller Waschbürsten in einer Reihe zu erreichen, ist jede Waschbüste über eine Aufnahme an einer doppelten Führungsstange befestigt. Dabei sind die Führungsstangen fest mit der Aufnahme der Waschbüsten verbunden. Entsprechend der Einleitung der oszillierenden Bewegung werden die Führungsstangen und somit gleichzeitig alle Büsten in einer Reihe bewegt. Die beiden Führungsstangen sind am balkenartigen Träger gelagert und bewegen sich folglich relativ zu diesem in Richtung des balkenartigen Trägers. Gleichermaßen ist es aber auch möglich, nur eine Führungsstange fest mit der Aufnahme der Waschbürsten zu verbinden, welche somit die oszillierende Bewegung überträgt. Die zweite Führungsstange kann in diesem Falle feststehend mit dem balkenartigen Träger verbunden werden, und somit bewegt sich bei dieser Alternative die Aufnahme mit der Waschbürste relativ zu dieser Stangenführung.

Die Einleitung der oszillierenden Bewegung erfolgt vorteilhafterweise mittels eines Hydraulikmotors, wobei selbstverständlich auch andere Antriebsaggregate eingesetzt werde können. Dieser Antrieb treibt über einen Riementrieb einen Exzentertrieb an. Der exzentrisch auf der Scheibe des Exzentertriebs angebrachte Bolzen greift in eine Führungsnut ein, die quer zum balkenartigen Träger verläuft. Die Drehbewegung des Exzentertriebs führt folglich zu einer oszillierenden Bewegung der Führungsnut in Richtung des balkenartigen Trägers. Mit dieser Führungsnut sind die oszillierenden Führungsstangen der beiden Reihen von Waschbüsten verbunden.

Zur Ausführung der Waschbürsten an sich ist auszuführen, dass deren Länge in Erstreckung der Trägerausrichtung ein Vielfaches größer ist als die Breite der Waschbürsten. Des Weiteren sind die Borsten einer jeden Waschbürste in Form eines näherungsweise rechteckigen Rings ausgeführt. Somit wird insbesondere der Abtransport von Schmutz durch die Waschbürsten verbessert, insofern als ein Freiraum zwischen den Rändern einer Waschbürste vorhanden ist. Zur Überdeckung der gesamten Länge der Vorrichtung zur Reinigung der Solaranlage ist es notwendig, zwei Reihen von Waschbürsten einzusetzen, insofern als hierdurch die Lücken zwischen den Waschbürsten durch die versetzte Anordnung abgedeckt werden können. Die einzelnen Waschbürsten sind in einer Aufnahme über Schnellspanner fixiert. Hierdurch wird es ermöglicht, diese wiederum zu deren Reinigung sowie zu deren Austausch aufgrund von Verschleiß schnell und einfach auswechseln zu können.

Die Auflage der Vielzahl der Waschbürsten auf der Solaranlagenoberfläche trägt zum Teil die Vorrichtung zur Reinigung entsprechender Solaranlagen. Um jedoch den Druck auf die Waschbürsten nicht zu hoch werden zu lassen, wird vorteilhafterweise eine Abstützung am Träger angebracht. Hierzu sind entsprechende Laufräder an dieser Abstützung angebracht, wobei die entsprechenden Laufräder sich über die Oberfläche der Solaranlage bewegen können.

Die erfindungsgemäße Vorrichtung zur Reinigung von Solaranlagen ist vorgesehen zur Verwendung an einem Nutzfahrzeug. Zu diesem Zweck ist die Vorrichtung über eine Winkelausgleichsvorrichtung an einer Hubvorrichtung mit dem Nutzfahrzeug verbunden. Die Hubvorrichtung ist aus dem Stand der Technik bei der Anwendung von Spritzanlagen bekannt. Sie dient zum Höhenausgleich der Lage zwischen der Solaranlagenfläche und dem Fahrzeugniveau.

Im Gegensatz zu dem aus dem landwirtschaftlichen Bereich bekannten Stand der Technik wird hier erweitert eine Winkelausgleichsvorrichtung eingesetzt. Hierzu ist an der unteren Seite ein Gelenk vorhanden, welches eine Drehachse bildet und somit zunächst die Lage der Vorrichtung zur Reinigung relativ zum Fahrzeug bestimmt, wobei diese Drehachse in erster Näherung parallel zur Fahrzeuglängsachse verläuft. Zur Einstellung des Winkels zwischen der Vorrichtung zur Reinigung der Solaranlage und dem Nutzfahrzeug wird ein Stellzylinder eingesetzt. Über entsprechende Steuerungen ist es so möglich, jeweils den passenden Winkel zwischen der Solaranlagenfläche sowie dem Nutzfahrzeug einzustellen.

Zum Transport auf den Straßen ist es möglich, über ein weiteres Gelenk an der Hubeinrichtung die Vorrichtung zur Reinigung der Solaranlage parallel in Fahrzeugrichtung zu schwenken, so dass diese innerhalb der zulässigen Fahrzeugbreite transportabel ist, wie dies ebenso aus dem Stand der Technik bei landwirtschaftlichen Spritzen bekannt ist.

Die Solaranlagen-Reinigungsvorrichtung kann in gleicher Weise wie an einem Nutzfahrzeug auch an einem Nutzfahrzeuganhänger oder an einem Aufbau für ein Nutzfahrzeug montiert werden. Gemeinsam ist diesen Ausführungen, dass zum Einsatz der Solaranlagen-Reinigungsvorrichtung ein Nutzfahrzeug eingesetzt wird.

Dabei ist es folglich notwendig, auch eine Anlage mit dem Nutzfahrzeug mitzuführen, die das Reinigungsmittel speichert und der Solaranlagen-Reinigungsanlage bereitstellt. Dieses ist in der Regel je nach Fahrzeugleistung und Anbauart ein größerer Tank mit einer Wasserpumpe. Als Reinigungsmedium kommt Reinstwasser zum Einsatz.

Eine vorteilhafte Ausführungsform der Erfindung ist in den Zeichnungen schematisch dargestellt und wird nachfolgend beispielhaft erläutert.

Es zeigen:
- Fig. 1: eine Vorrichtung 01 zur Reinigung von Solaranlagen 02 auf dieser abgelegt und an einem Nutzfahrzeug 03 befestigt;
- Fig. 2: die gleiche Vorrichtung 01 zur Reinigung von Solaranlagen 02 aus einer weiteren Perspektive;
- Fig. 3: eine Ansicht längs des balkenartigen Trägers 10 mit Abstützung 11, Waschdüsen 13, 14 und Waschbürsten 15, 16;
- Fig. 4: die Anordnung der Waschbürsten 15, 16 am balkenartigen Träger 10;
- Fig. 5: eine Darstellung einer Waschbürste 15, 16;
- Fig. 6: eine perspektivische Darstellung des balkenartigen Trägers 10 mit Abstützung 11, Waschdüsen 14 und Waschbürsten 15, 16;
- Fig. 7: den Antrieb 22, 23 zur Oszillation der Waschbürsten 15, 16;
- Fig. 8: ein Nutzfahrzeug 03 mit einer erfindungsgemäßen Vorrichtung 01 zur Reinigung von Solaranlagen 02;
- Fig. 9: die Winkelausgleichsvorrichtung 05 zur Einstellung des Winkels zwischen der Vorrichtung 01 zur Reinigung von Solaranlagen und dem Fahrzeug 03.

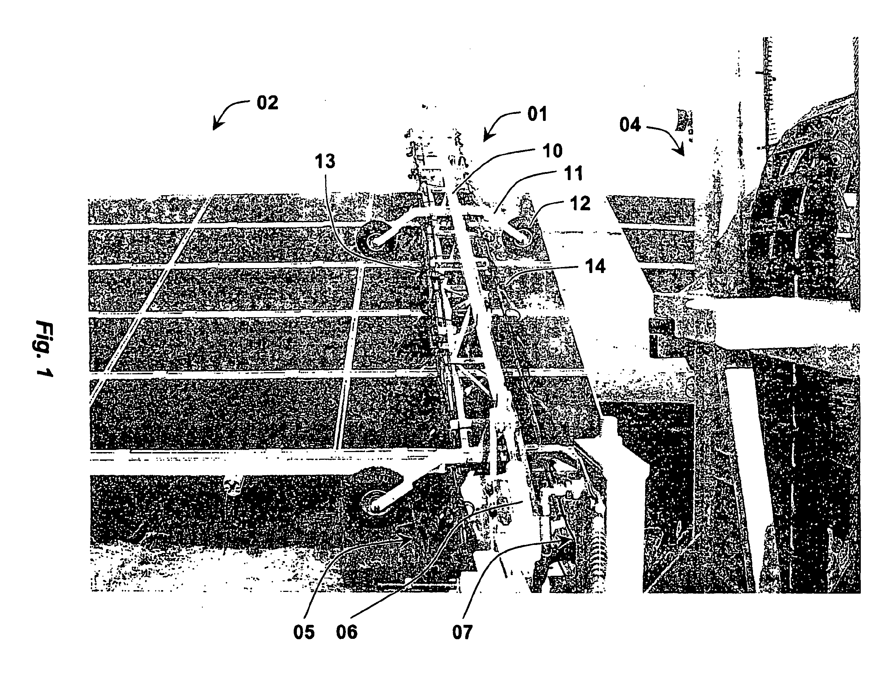

In Fig. 1 ist die erfinderische Vorrichtung 01 zur Reinigung von Solaranlagen im Einsatz zu sehen. Wie zu erkennen ist, ist das Panel der Solaranlage 02 gegenüber der Horizontalen geneigt. Auf dem Panel aufliegend befindet sich die erfinderische Vorrichtung 01 zur Reinigung desselben. Wie zu erkennen ist, besteht diese aus einem länglichen balkenartigen Träger 10, an dem beidseitig Waschdüsen 13, 14 angebracht sind. Mittig unterhalb des Trägers 10 befinden sich die Waschbüsten 15, 16. Des Weiteren ist die Abstützung 11 mit je zwei Laufrädern 12 sowohl im oberen Bereich als auch im unteren Bereich zu erkennen. Ansatzweise ist sowohl die Hubvorrichtung 04 als auch die Vorrichtung zur Änderung des Winkelausgleichs 05 dargestellt.

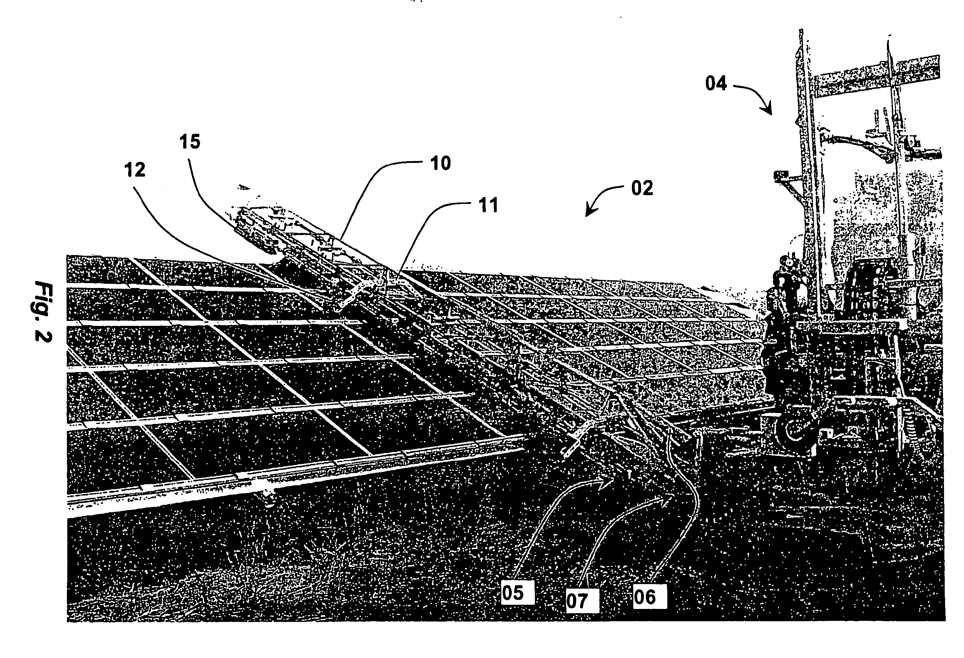

Die Fig. 2 zeigt das Gleiche wie Fig. 1 aus einer weiteren Perspektive. Wiederum zeigt die Abbildung die erfinderische Vorrichtung 01 zur Reinigung der Solaranlagen mit ihrem balkenartigen Träger 10 auf einem Solarpanel 02 aufliegend. Wiederum gut zu erkennen ist die Abstützung 11 mit den Laufrädern 12. Aus dieser Perspektive besser zu erkennen sind die Waschbürsten 15, 16, welche sich unterhalb des balkenartigen Trägers 10 befinden. Ebenso ist hier die sowohl die Hubvorrichtung 04 der Vorrichtung 01 am Nutzfahrzeug 03 zu erkennen als auch die Winkelausgleichsvorrichtung 05, welche im unteren Bereich einen Drehpunkt besitzt und oben mittels eines Stellzylinders 06 den entsprechenden Winkelausgleich erzeugen kann. Wie in dieser Ansicht gut zu erkennen ist, besteht der balkenartige Träger 10 aus einer Konstruktion, wie sie aus dem Kranbau bekannt ist. Somit wird dieser vornehmlich gebildet aus zwei unten liegenden Profilen sowie einem oben liegendem Profil mit Verstrebungen dazwischen. Die Abstützung 11 besteht aus einem Profil, welches einen Bogen quer zum balkenartigen Träger 10 spannt. Beidseitig dieses Bogens der Abstützung 11 befinden sich entsprechende Laufräder 12. Die Waschbürsten 15, 16 sind in zwei Reihen angeordnet, wobei zwischen jeweils zwei Waschbürsten ein kleiner Abstand verbleibt.

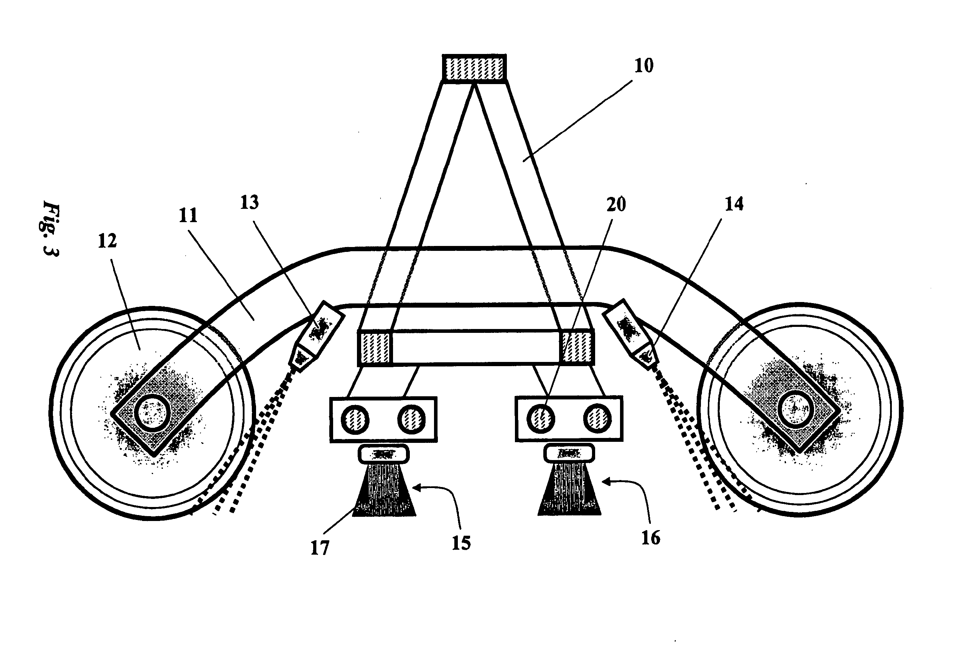

Die Fig. 3 zeigt die erfinderische Vorrichtung 10 in Sicht längs des balkenartigen Trägers 10. Mittig in der Art eines Dreiecks gut zu erkennen ist der balkenartige Träger 10, welcher die tragende Einheit der Vorrichtung 01 bildet. Quer zum balkenartigen Träger 10 verlaufend und einen Bogen spannend liegt die Abstützung 11 der Vorrichtung 01. Beidseitig befinden sich entsprechende Laufräder 12 zur Abstützung der Vorrichtung 01 auf dem Solaranlagenpanel 02. Beidseitig des balkenartigen Trägers 10 in Höhe der Abstützung 11 befinden sich die Waschdüsen 13, 14, durch welche eine entsprechende Reinigungsflüssigkeit auf das Solaranlagenpanel 02 gesprüht wird. Unterhalb des balkenartigen Trägers 10 sind die Waschbürsten 15, 16 in zwei Reihen angeordnet. Diese werden jeweils in einer Aufnahme 18 mittels Schnellspanner 19 gehalten (nicht dargestellt). Die Aufnahme 18, an der jeweils die Waschbürste 15, 16 befestigt ist, ist wiederum auf zwei Führungsstangen 20 befestigt. Eine oszillierende Bewegung dieser Führungsstangen 20 führt zur entsprechenden Bewegung der Waschbürsten 15, 16. Die Führungsstangen 20 sind über eine Gleitlagerung mit dem balkenartigen Träger 10 verbunden, insofern bewegen sich die Führungsstangen 20 mit den Waschbürsten 15, 16 relativ zum balkenartigen Träger 10 in der Erstreckungsrichtung eben jenes balkenartigen Trägers 10.

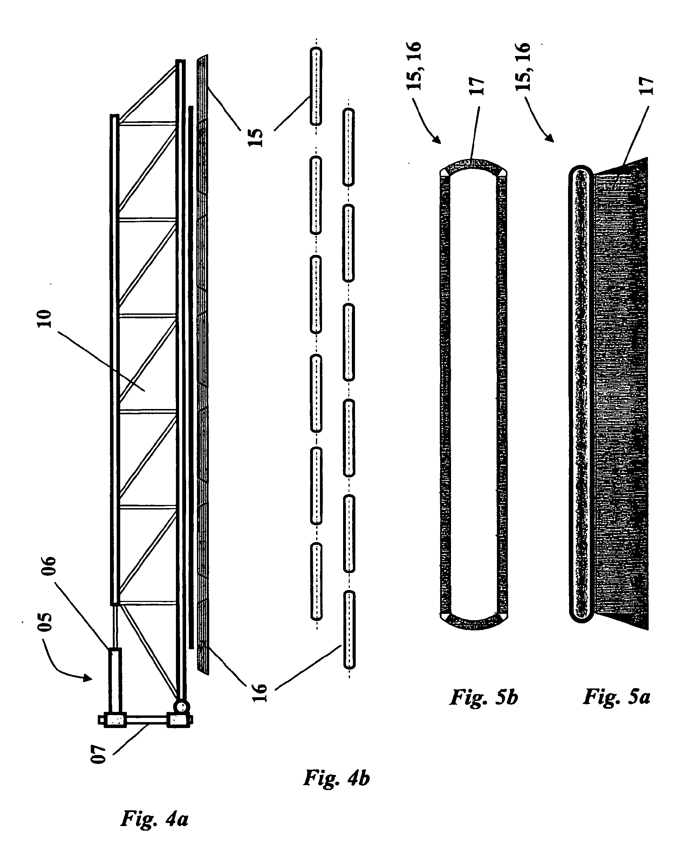

In Fig. 4a ist nur der balkenartige Träger 10 mit der Anordnung der Waschbürsten 15, 16 dargestellt. Die Anordnung der Waschbürsten 15, 16 in zwei Reihen ist in Fig. 4b skizziert. Ebenso ist aus der Fig. 4a die Winkelausgleichsvorrichtung 05 zu erkennen. Hierbei befindet sich am unteren linken Ende der Abbildung das Drehgelenk, um welches der balkenartige Träger 10 geschwenkt werden kann, wobei zu diesem Zweck der Stellzylinder 06, welcher ebenso dargestellt ist, vorgesehen ist.

In Fig. 5a sowie 5b ist eine Waschbürste 15, 16, von denen eine Vielzahl verwendet wird, dargestellt. Während in Fig. 5a in der Ansicht lediglich eine gewöhnliche Bürste zu erkennen ist, wird in Fig. 5b der ringartige Aufbau der Waschbürste 15, 16 erkennbar. In der bevorzugten Ausführung der Waschbürste 15, 16 werden die Borsten 17 in zwei Reihen angeordnet, wobei sich dazwischen ein Leerraum befindet. Die beiden Reihen abschließend bilden zwei bogenförmige Anordnungen von Borsten 17 einen näherungsweise geschlossenen Ring. Diese Ausgestaltung hat zum Zweck, dass Schmutz, welcher durch die erste Borstenreihe gelöst wird, hinter der ersten Borstenreihe bereits mit dem Waschwasser herabfließen kann, und mittels der zweiten Borstenreihe der Restschmutz von der Oberfläche des Solaranlagen-Panels gelöst wird.

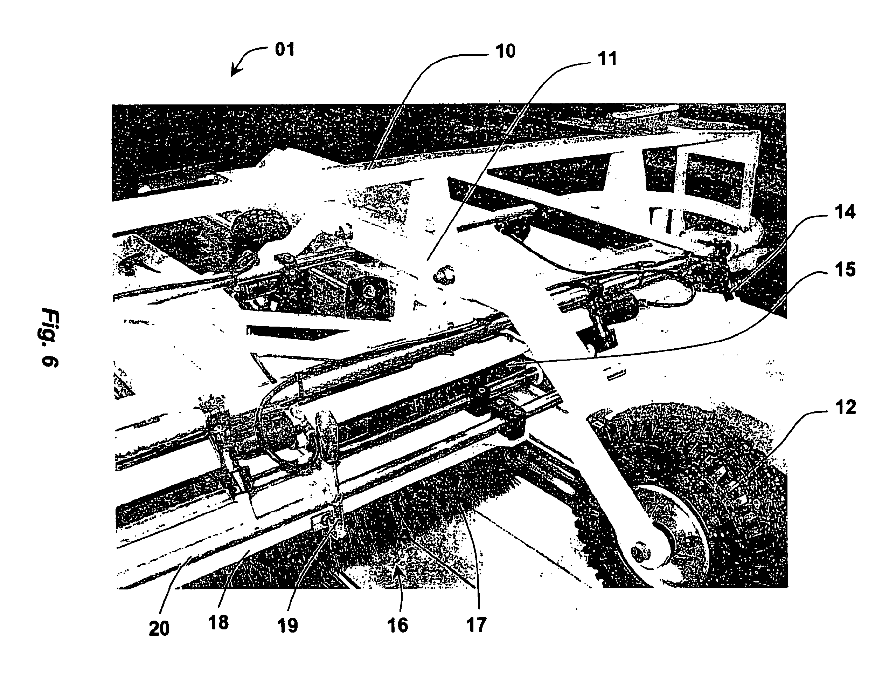

Fig. 6 zeigt eine detailliertere Darstellung des balkenartigen Trägers 10 im Bereich der Abstützung 11. Hier wird genauer die Anordnung der Waschdüsen 13, 14 am balkenartigen Träger 10 sowie der Waschbürsten 15, 16 unterhalb desselben offensichtlich. Die Waschbürsten 15, 16 sind an einer plattenartigen Aufnahme 18 mittels eines Schnellspanners 19 gehalten. Diese plattenartige Aufnahme 18 ist wiederum an den oszillierenden Führungsstangen 20 angebunden.

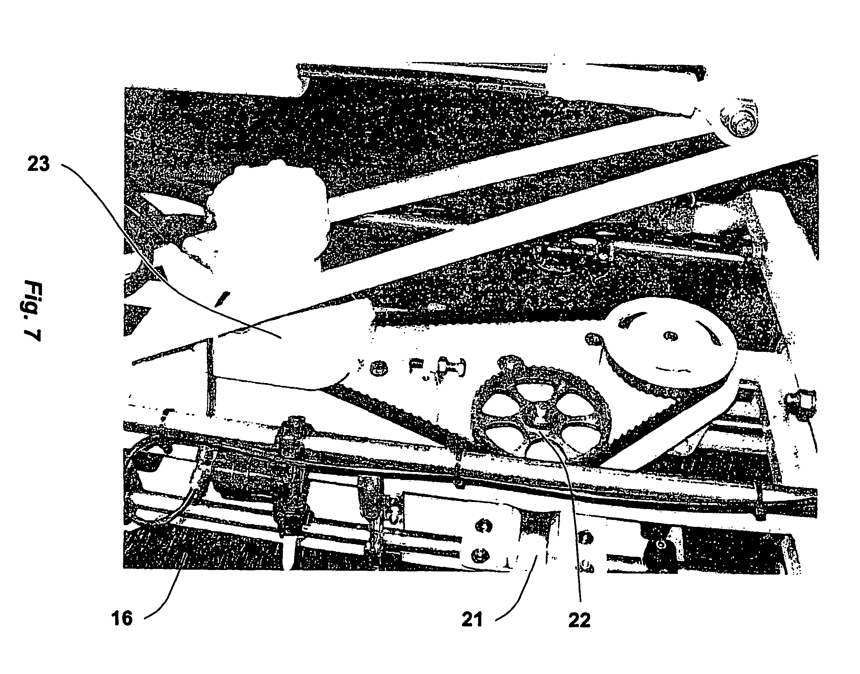

Die Ausführung der erfinderischen Oszillation der Waschbürsten 15, 16 wird aus Fig. 7 ersichtlich. Von einem Hydraulikmotor als Antrieb 23 wird ein Riementrieb angetrieben, der wiederum an einem Exentertrieb 22 angreift. Dieser besitzt (unterhalb, in dieser Figur nicht sichtbar) einen Exzenterbolzen, welcher in eine Führungsnut 21 eingreift. Diese Führungsnut 21 ist fest mit den Führungsstangen 20 verbunden, an welchen die Aufnahmen 18 mit den Waschbürsten 15, 16 befestigt sind. Entsprechend der Lage der Führungsnut 21 quer zum balkenartigen Träger 10 erfolgt die durch den Exzentertrieb 22 hervorgerufene Bewegung längs des balkenartigen Trägers 10.

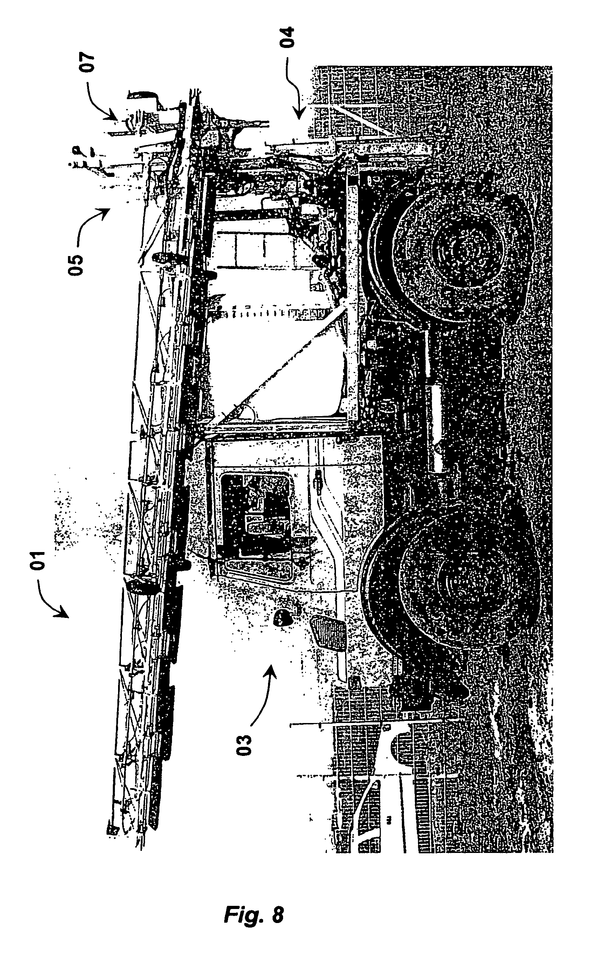

Die Fig. 8 zeigt die Lösung für den Einsatz eines mobilen Fahrzeugs 03 zur Verwendung der erfinderischen Vorrichtung 01 zur Reinigung von Solaranlagen 02. Zu diesem Zweck ist an einer Hubvorrichtung 04 am Heck des Fahrzeugs 03 die Vorrichtung 01 angebracht, welche zum Transport längs des Fahrzeugs 03 geschwenkt werden kann.

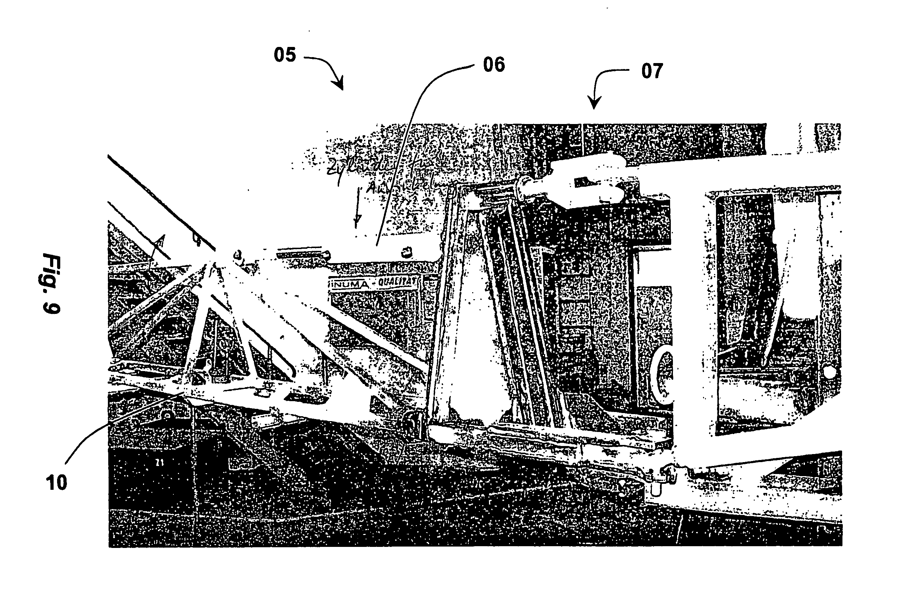

Fig. 9 zeigt nochmals die Winkelausgleichsvorrichtung 05, welche aus einem Drehgelenk im unteren Bereich sowie einem Stellzylinder 06, welcher an der Oberstrebe des balkenartigen Trägers 10 angreift, besteht.

## Patentansprüche

1. Solaranlagen-Reinigungsvorrichtung (01) zur Reinigung der der Sonneneinstrahlung zugewandten Seite von Anlagen (02) zur Energiegewinnung durch Sonneneinstrahlung mittels der Verwendung von Wasser als Reinigungsmedium, wobei das Wasser über Waschdüsen (13, 14) auf die zu reinigende Fläche aufgesprüht wird, wobei Waschbürsten (15, 16) eingesetzt werden, wobei die Waschdüsen (13, 14) sowie die Waschbürsten (15, 16) an einem balkenartigen Träger (10) befestigt sind und wobei die Solaranlagen-Reinigungsvorrichtung (01) bestimmt ist, im Einsatzzweck im Wesentlichen linear über die zu reinigende Fläche bewegt zu werden, und wobei auf beiden Seiten des balkenartigen Trägers (10) Waschdüsen (13, 14) angebracht sind, und wobei sich zwischen den Waschdüsen (13, 14) die Waschbürsten (15, 16) befinden,
**dadurch gekennzeichnet,**
**dass** die Waschbürsten (15, 16) eine vorwiegend oszillatorische Bewegung vollziehen, wobei die Bewegungsrichtung vorwiegend der Ausrichtung des balkenartigen Trägers (10) entspricht.

2. Solaranlagen-Reinigungsvorrichtung (01) gemäß Anspruch 1,
**dadurch gekennzeichnet,**
**dass** die Waschbürsten (15, 16) mittels eines Antriebs relativ zum balkenartigen Träger (10) bewegt werden, wobei die Bewegung im Wesentlichen parallel zur zu reinigenden Fläche erfolgt.

3. Solaranlagen-Reinigungsvorrichtung (01) gemäß einem der vorhergehenden Ansprüche 1 bis 2,
**dadurch gekennzeichnet,**
**dass** die Vielzahl von Waschbürsten (15, 16) in wenigstens zwei Reihen längs des balkenartigen Trägers (10) angeordnet ist.

4. Solaranlagen-Reinigungsvorrichtung (01) gemäß Anspruch 3,
**dadurch gekennzeichnet,**
**dass** die mehreren Waschbürsten (15, 16) einer Reihe mittels einer Befestigungsvorrichtung an wenigstens einer Führungsstange (20) fixiert sind, die die Waschbüsten (15, 16) in einer Reihe in eine gleiche oszillatorische Bewegung in Richtung des balkenartigen Trägers (10) versetzt, wobei die Führungsstange (20) verschiebbar am balkenartigen Träger (10) gelagert ist.

5. Solaranlagen-Reinigungsvorrichtung (01) gemäß Anspruch 4,
**dadurch gekennzeichnet,**
**dass** die oszillatorische Bewegung durch einen Exzentertrieb (22) erzeugt wird, der in eine Führungsnut (21), welche quer zum balkenartigen Träger (10) verläuft, eingreift, wobei die Führungsnut (21) mit der Führungsstange (20) verbunden ist.

6. Solaranlagen-Reinigungsvorrichtung (01) gemäß Anspruch 5,
**dadurch gekennzeichnet,**
**dass** der Antrieb für die Erzeugung der rotatorischen Bewegung des Exzentertriebs (22) ein Hydraulikmotor (23) ist.

7. Solaranlagen-Reinigungsvorrichtung (01) gemäß einem der vorhergehenden Ansprüche 1 bis 6,
**dadurch gekennzeichnet,**
**dass** die Länge einer Waschbürste (15, 16) in Richtung des balkenartigen Trägers (10) größer als die Breite der Waschbürste (15, 16) ist.

8. Solaranlagen-Reinigungsvorrichtung (01) gemäß einem der vorhergehenden Ansprüche 1 bis 7,
**dadurch gekennzeichnet,**
**dass** die Borsten (17) einer Waschbürste (15, 16) einen Ring bilden.

9. Solaranlagen-Reinigungsvorrichtung (01) gemäß Anspruch 4 oder Ansprüchen 5-8 in Verbindung mit Anspruch 4,
**dadurch gekennzeichnet,**
**dass** jeweils die Waschbürste (15, 16) an einer Aufnahme (18), welche mit der Führungsstange (20) fest verbunden ist, mittels eines Schnellspanners (19) gehalten wird.

10. Solaranlagen-Reinigungsvorrichtung (01) gemäß einem der vorhergehenden Ansprüche 1 bis 9,
**dadurch gekennzeichnet,**
**dass** am balkenartigen Träger (10) eine Abstützung (11) mit Laufrädern (12) angebracht ist.

11. Solaranlagen-Reinigungsvorrichtung (01) gemäß einem der vorhergehenden Ansprüche 1 bis 10,
**dadurch gekennzeichnet,**
**dass** am Ende des balkenartigen Trägers (10) eine Winkelausgleichsvorrichtung (05) vorhanden ist, wobei über ein Stellglied (06) an der Winkelausgleichsvorrichtung (05) der Winkel zwischen dem balkenartigen Träger (10) und einem Fahrzeug (03), an dem die Vorrichtung (01) montierbar ist, in einem Winkel zwischen -15° bis +90° gegenüber der Horizontalen bezogen auf das Fahrzeug (03) geschwenkt werden kann.

12. Nutzfahrzeug (03) oder Nutzfahrzeuganhänger oder Nutzfahrzeuganbau, an dem eine Solaranlagen-Reinigungsvorrichtung (01) gemäß einem der vorhergehenden Ansprüche 1 bis 11 angebracht ist,
**dadurch gekennzeichnet,**
**dass** die Solaranlagen-Reinigungsvorrichtung (01) mittels einer Hubvorrichtung (04) relativ zum Nutzfahrzeug (03) in der Höhenlage verstellt werden kann und dass die Solaranlagen-Reinigungsvorrichtung (01) mittels einer Winkelausgleichsvorrichtung (05), welche an der Hubvorrichtung (04) angebunden ist, gegenüber dem Nutzfahrzeug (03) geschwenkt werden kann.

13. Nutzfahrzeug (03) nach Anspruch 12,
**dadurch gekennzeichnet,**
**dass** die Solaranlagen-Reinigungsvorrichtung (01) samt Winkelausgleichsvorrichtung (05) gelenkig an der Hubvorrichtung (04) angebunden ist und über eine näherungsweise senkrechte Drehachse zum Transport in Richtung des Fahrzeugs (03) geschwenkt werden kann.

14. Nutzfahrzeug (03) nach Anspruch 12 oder 13,
**dadurch gekennzeichnet,**
**dass** über ein Stellglied an der Winkelausgleichsvorrichtung (05) der Winkel zwischen dem balkenartigen Träger (10) und der Hubvorrichtung (04) in einem Winkel zwischen -15° bis +90° gegenüber der Horizontalen bezogen auf das Nutzfahrzeug (03) geschwenkt werden kann.

15. Nutzfahrzeug (03) gemäß einem der vorhergehenden Ansprüche 12 bis 14,
**dadurch gekennzeichnet,**
**dass** eine am Fahrzeug (03) angebrachte Reinigungsmittel-Speicherversorgungsanlage Reinstwasser zur Verfügung stellt.

## Claims

1. Cleaning device (01) for solar installations for cleaning the sunward side of installations (02) for energy generation from solar radiation by using water as a cleaning medium, wherein the water is sprayed on the surface to be cleaned through washing nozzles (13, 14), wherein washing brushes (15, 16) are used, wherein the washing nozzles (13, 14) and the washing brushes (15, 16) are attached to a beamlike carrier (10) and wherein the cleaning device (01) for solar installations is intended for the purpose of being moved substantially linearly across the respective surface to be cleaned and wherein on both sides of the beamlike carrier (10) washing nozzles (13, 14) are attached and wherein the washing brushes (15, 16) are located between the washing nozzles (13, 14),
**characterized in that**
the washing brushes (15,16) perform a predominantly oscillating movement, wherein the direction of the movement predominantly corresponds to the alignment of the beamlike carrier (10).

2. Cleaning device (01) for solar installations according to Claim 1,
**characterized in that**
the washing brushes (15, 16) are moved in relation to the beamlike carrier (10) by a motor, wherein the movement is performed essentially parallel to the surface to be cleaned.

3. Cleaning device (01) for solar installations according to any of the preceding Claims 1 and 2,
**characterized in that**
the plurality of washing brushes (15, 16) is aligned in at least two rows along the beamlike carrier (10).

4. Cleaning device (01) for solar installations according to Claim 3,
**characterized in that**
the several washing brushes (15, 16) of one row are attached by means of a fastening device to at least one guiding rod (20) which displaces the washing brushes (15, 16) in one row in an identical oscillating movement in the direction of the beamlike carrier (10), wherein the guiding rod (20) is mounted slidably on the beamlike carrier (10).

5. Cleaning device (01) for solar installations according to Claim 4,
**characterized in that**
the oscillating movement is generated by an eccentric drive (22), which engages into a guiding groove (21) that runs transversally to the beamlike carrier (10), wherein the guiding groove (21) is connected to the guiding rod (20).

6. Cleaning device (01) for solar installations according to Claim 5,
**characterized in that**
the motor generating the rotatory movement of the eccentric drive (22) is a hydraulic motor (23).

7. Cleaning device (01) for solar installations according to any of the preceding Claims 1 to 6,
**characterized in that**
the length of a washing brush (15, 16) in the direction of the beamlike carrier (10) is bigger than the width of the washing brush (15, 16).

8. Cleaning device (01) for solar installations according to any of the preceding Claims 1 to 6,
**characterized in that**
the bristles (17) of a washing brush (15, 16) form a ring.

9. Cleaning device (01) for solar installations according to Claim 4 or according to the Claims 5 to 8 in connection with Claim 4,
**characterized in that**
the respective washing brushes (15,16) are held by a quick release (19) at a receptacle (18), which is firmly attached to the guiding rod (20).

10. Cleaning device (01) for solar installations according to any of the preceding Claims 1 to 9,
**characterized in that**
a support (11) with running wheels (12) is attached to the beamlike carrier (10).

11. Cleaning device (01) for solar installations according to one of the preceding Claims 1 to 10,
**characterized in that**
at the end of the beamlike carrier (10) there is provided an angle compensation device (05), wherein by means of an actuator (06) on the angle compensation device (05) the angle between the beamlike carrier (10) and a vehicle (03) on which the device (01) is mountable can be swivelled at an angle of -15° to +90° to the horizontal in relation to the vehicle (03) .

12. Utility vehicle (03) or utility vehicle trailer or utility vehicle attachment on which a cleaning device (01) for solar installations according to any of the preceding Claims 1 to 11 is mounted,
**characterized in that**
the cleaning device (01) for solar installations can be adjusted in height relative to the utility vehicle (03) by a lifting device (04), and the cleaning device (01) for solar installations can be swivelled relative to the utility vehicle (03) by an angle compensation device (05) attached to the lifting device (04).

13. Utility vehicle according to Claim 12,
**characterized in that**
the cleaning device (01) for solar installations and the angle compensation device (05) are both attached to the lifting device (04) in an articulated manner and can be swivelled in the direction of the vehicle (03) for transport via an approximately vertical swivelling axis.

14. Utility vehicle (03) according to Claim 12 or 13,
**characterized in that**
the angle between the beamlike carrier (10) and the lifting device (04) can be swivelled at an angle of -15° to +90° to the horizontal in relation to the utility vehicle (03) by means of an actuator on the angle compensation device (05).

15. Utility vehicle (03) according to one of the preceding Claims 12 to 14,
**characterized in that**
a reservoir and supply system for the cleaning agents that is attached to the vehicle (03) provides ultrapure water.

## Revendications

1. Dispositif (01) pour le nettoyage d'installations solaires pour nettoyer le côté orienté vers le soleil des installations (02) pour la production d'énergie provenant du rayonnement solaire au moyen de l'utilisation d'eau comme agent de nettoyage, dans lequel l'eau est pulvérisée sur la surface à nettoyer par des buses de lavage (13, 14), dans lequel des brosses de lavage (15, 16) sont utilisées, dans lequel les buses de lavage (13, 14) et les brosses de lavage (15, 16) sont attachées à une poutre (10), et dans lequel le dispositif (01) pour le nettoyage d'installations solaires est conçu pour l'objectif de se déplacer à travers la surface à nettoyer essentiellement de façon linéaire, et dans lequel des buses de lavage (13, 14) sont attachées aux deux côtés de la poutre (10), et dans lequel les brosses de lavage (15,16) se trouvent entre les buses de lavage (13, 14),
**caractérisé en ce que**
les brosses de lavage (15, 16) exécutent un mouvement surtout oscillant, dans lequel la direction de mouvement est essentiellement équivalente à l'orientation de la poutre (10).

2. Dispositif (01) pour le nettoyage d'installations solaires selon la revendication 1,
**caractérisé en ce que**
les brosses de lavage (15, 16) se déplacent en relation de la poutre (10) par un moteur, dans lequel le mouvement s'effectue essentiellement en parallèle de la surface à nettoyer.

3. Dispositif (01) pour le nettoyage d'installations solaires selon l'une quelconque des revendications précédentes 1 à 2,
**caractérisé en ce que**
la pluralité des brosses de lavage (15, 16) est disposée en au moins deux rangées le long de la poutre (10).

4. Dispositif (01) pour le nettoyage d'installations solaires selon la revendication 3,
**caractérisé en ce que**
les plusieurs brosses de lavage (15, 16) d'une rangée sont fixées par un dispositif de fixation à au moins une barre de guidage (20), qui met les brosses de lavage (15, 16) d'une rangée en un mouvement égal oscillant en direction de la poutre (10), dans lequel la barre de guidage (20) est attachée à la poutre (10) de façon ajustable.

5. Dispositif (01) pour le nettoyage d'installations solaires selon la revendication 4,
**caractérisé en ce que**
le mouvement oscillant est généré par un excentrique (22) qui s'enclenche dans une rainure de guidage (21) qui s'étend transversalement à la poutre (10), dans lequel la rainure de guidage (21) est connectée à la barre de guidage (20).

6. Dispositif (01) pour le nettoyage d'installations solaires selon la revendication 5,
**caractérisé en ce que**
le moteur pour générer le mouvement rotatif de l'excentrique (22) est un moteur hydraulique (23).

7. Dispositif (01) pour le nettoyage d'installations solaires selon l'une quelconque des revendications précédentes 1 à 6,
**caractérisé en ce que**
la longueur d'une brosse de lavage (15, 16) en direction de la poutre (10) est plus grande que la largeur de la brosse de lavage (15, 16).

8. Dispositif (01) pour le nettoyage d'installations solaires (01) selon l'une quelconque des revendications précédentes 1 à 7,
**caractérisé en ce que**
les soies (17) d'une brosse de lavage (15, 16) constituent une bague.

9. Dispositif (01) pour le nettoyage d'installations solaires selon la revendication 4 ou selon les revendications 5 à 8 en combinaison avec la revendication 4,
**caractérisé en ce que**
la brosse de lavage (15, 16) respective est tenue par un desserrage rapide (19) à un récipient (18) qui est solidement fixé à la barre de guidage (20).

10. Dispositif (01) pour le nettoyage d'installations solaires selon l'une quelconque des revendications précédentes 1 à 9,
**caractérisé en ce qu'**
un support (11) avec des roues de roulement (12) est attaché à la poutre (10).

11. dispositif (01) pour le nettoyage d'installations solaires selon l'une quelconque des revendications précédentes 1 à 10,
**caractérisé en ce que**
sur l'extrémité de la poutre (10) se trouve un dispositif de compensation angulaire (05), dans lequel l'angle entre la poutre (10) et un véhicule (03), auquel le dispositif (01) est accrochable, peut être pivoté selon un angle de -15° à +90° par rapport à l'horizontale en relation du véhicule (03) par un actionneur (06) situé au dispositif de compensation angulaire (05).

12. Véhicule utilitaire (03) ou remorque utilitaire ou accouplement au véhicule utilitaire, auquel un dispositif (01) pour le nettoyage d'installations solaires (01) selon l'une quelconque des revendications précédentes 1 à 11 est accroché,
**caractérisé en ce que**
le dispositif (01) pour le nettoyage d'installations solaires est réglable en hauteur en relation du véhicule utilitaire (03) par un dispositif de levage (04), et le dispositif (01) pour le nettoyage d'installations solaires est pivotable en relation du véhicule utilitaire (03) par un dispositif de compensation angulaire (05) qui est attaché au dispositif de levage (04).

13. Véhicule utilitaire (03) selon la revendication 12,
**caractérisé en ce que**
le dispositif (01) pour le nettoyage d'installations solaires avec le dispositif de compensation angulaire (05) est attaché de manière articulée au dispositif de levage (04) et peut être pivoté moyennant un axe approximativement vertical en direction du véhicule utilitaire (03) pour le transport.

14. Véhicule utilitaire (03) selon les revendications 12 ou 13,
**caractérisé en ce que**
l'angle entre la poutre (10) et le dispositif de levage (04) peut être pivoté selon un angle de -15° à +90° par rapport à l'horizontale en relation du véhicule utilitaire (03) par un actionneur situé au dispositif de compensation angulaire (05).

15. Véhicule utilitaire (03) selon les revendications précédentes 12 à 14,
**caractérisé en ce qu'**
un système de réservoir et alimentation pour des agents de nettoyage attaché au véhicule utilitaire (03) fournit de l'eau extra-pure.
